# EUROPEAN PATENT APPLICATION

(11) **EP 4 489 413 A1**
(43) Date of publication of application: **08.01.2025**
(21) Application number: 23762772.4
(22) Date of filing: 21.02.2023
(51) Int. Cl.: H04N 21/439, H04N 5/268

(54) **AUDIO PLAYING METHOD AND APPARATUS, ELECTRONIC DEVICE AND STORAGE MEDIUM**

(30) Priority: 02.03.2022 CN 202210200144
(71) Applicant: BEIJING BYTEDANCE NETWORK TECHNOLOGY CO., LTD., Beijing 100041 (CN)
(72) Inventor: BAI, Donghui, Beijing 100086 (CN); GUI, Kunzhi, Beijing 100086 (CN); LIU, Jiangnan, Beijing 100086 (CN); CHANG, Haocheng, Beijing 100086 (CN)
(74) Representative: Dentons UK and Middle East LLP
(86) International application number: PCT/CN2023/077300
(87) International publication number: WO 2023/165371

(57) **Abstract**

Disclosed are an audio playing method and apparatus, an electronic device and a storage medium. The method comprises: during a process of playing current audio and video data, when an audio data switching instruction is obtained, requesting from a server target audio data associated with the audio data switching instruction; according to key frame information of video data in the current audio and video data, determining a playing time of the target audio data; and at the playing time, switching initial audio data in the current audio and video data into the target audio data, and playing the target audio data.

## Description

The present application claims priority to Chinese Patent Application No. 202210200144.6, filed with the China National Intellectual Property Administration (CNIPA) on March 2, 2022, which is incorporated herein by reference in its entirety.

### TECHNICAL FIELD

The present disclosure relates to the technical field of audio data processing, e.g., to an audio playing method and apparatus, an electronic device, and a storage medium.

### BACKGROUND

In order to make the audience scope of video works wider, usually, some video works will be made into videos of different language versions for audiences speaking different languages to watch. When an audience needs to switch audios of different language versions of the same video content during a process of watching a video, a playing task needs to be restarted, and switching of dubbing audios of different languages is realized by switching the videos of the corresponding languages.

However, in the above-mentioned audio playing method that achieves the effect of achieving the dubbing audios by switching the videos, a video file downloaded by the new playing task includes the same video content with that previously played, and redundant downloading occurs, which may increase traffic usage. Moreover, the switching method of restarting the playing task may interrupt the current video playing, leading to black screen, lag, etc. and resulting in poor playing experience.

### SUMMARY

The present disclosure provides an audio playing method, apparatus, electronic device, and storage medium. It can be realized that only audio data is switched during a process of playing a video, avoiding redundant video content downloading and allowing the video to be played smoothly.

In a first aspect, an audio playing method is provided in the present disclosure, wherein the method is applied to a client, and the method comprises:
during a process of playing current audio and video data, upon obtaining an audio data switching instruction, requesting target audio data associated with the audio data switching instruction from a server;
determining a playing time of the target audio data based on key frame information of video data of the current audio and video data; and
switching initial audio data of the current audio and video data to the target audio data and playing the target audio data at the playing time.

In a second aspect, an audio playing apparatus is provided in the present disclosure, comprising:
an audio switching start module, configured to, during a process of playing current audio and video data, upon obtaining an audio data switching instruction, request target audio data associated with the audio data switching instruction from a server;
an audio switching time determining module, configured to determine a playing time of the target audio data based on key frame information of video data of the current audio and video data; and
an audio switching and playing module configured to switch initial audio data of the current audio and video data to the target audio data and play the target audio data at the playing time.

In a third aspect, an electronic device is provided in the present disclosure, comprising:
one or more processors; and
a storage configured to store one or more programs.

The one or more programs, when executed by the one or more processors, cause the one or more processors to implement the audio playing method described above.

In a fourth aspect, a storage medium comprising computer-executable instructions is provided in the present disclosure, wherein the computer-executable instructions, when executed by a computer processor, cause the computer processor to implement the audio playing method described above.

In a fifth aspect, a computer program product is provided in the present disclosure, comprising a computer program carried on a non-transitory computer-readable storage medium, wherein the computer program comprises program codes for performing the audio playing method described above.

### BRIEF DESCRIPTION OF DRAWINGS

FIG. 1 is a flowchart of an audio playing method provided by Embodiment I of the present disclosure;
FIG. 2 is a flowchart of an audio playing method provided by Embodiment II of the present disclosure;
FIG. 3 is a structural schematic diagram of an audio playing apparatus provided by Embodiment III of the present disclosure; and
FIG. 4 is a structural schematic diagram of an electronic device provided by Embodiment IV of the present disclosure.

### DETAILED DESCRIPTION

Embodiments of the present disclosure will be described in more detail below with reference to the accompanying drawings. Although certain embodiments of the present disclosure are illustrated in the accompanying drawings, it should be understood that the present disclosure may be embodied in various forms and should not be construed as limited to the embodiments set forth herein, but rather, these embodiments are provided for a more thorough and complete understanding of the disclosure. It should be understood that the drawings and examples of the present disclosure are for exemplary purposes only and are not intended to limit the scope of the present disclosure.

The various steps recited in the method implementation of the present disclosure may be executed in a different order, and/or in parallel. Further, the method implementation may include additional steps and/or omit performing illustrated steps. The scope of the present disclosure is not limited in this regard.

As used herein, the term "include" and variations thereof are open inclusion, that is, "including, but not limited to". The term "based on" is "based at least in part on." The term "one embodiment" means "at least one embodiment"; The term "another embodiment" means "at least one additional embodiment"; The term "some embodiments" means "at least some embodiments". Relevant definitions for other terms will be given in the description below.

Note that the concepts of "first", "second", and the like mentioned in the present disclosure are used only to distinguish different devices, modules, or units, and are not used to limit the order or interdependence of functions performed by these devices, modules, or units.

It is noted that the modifications referred to in the present disclosure as "a", "a plurality" are illustrative rather than limiting, and those skilled in the art should understand that it should be understood as "one or more" unless the context clearly dictates otherwise.

### Embodiment I

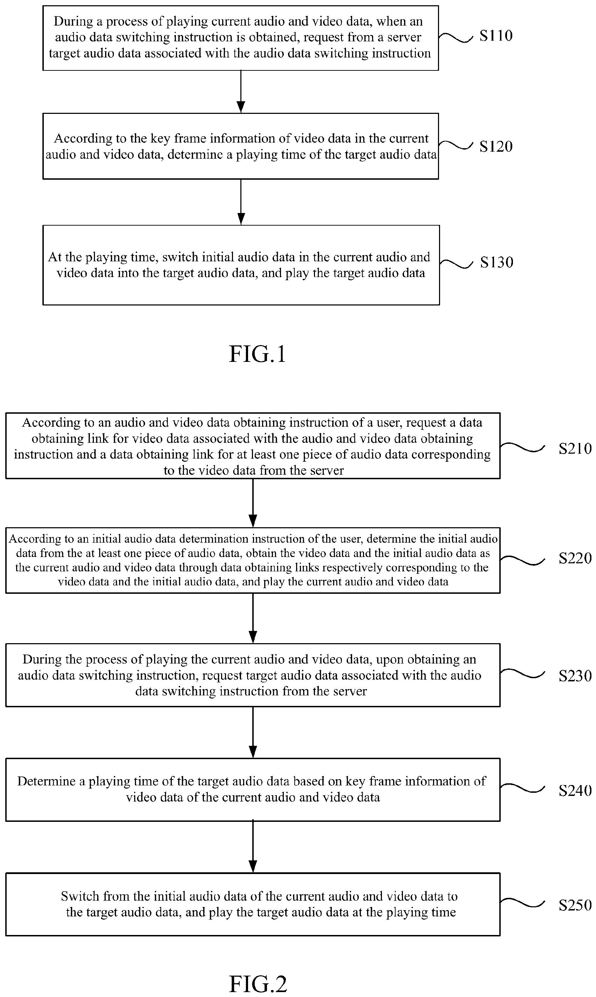

FIG. 1 is a flowchart of an audio playing method provided by Embodiment I of the present disclosure. This embodiment of the present disclosure is applicable to a scenario of audio playing, e.g., a case in which audio data is switched during a process of playing a video. The audio playing method may be performed by an audio playing apparatus configured in a client. The audio playing apparatus may be implemented in software and/or hardware form and may be configured in an electronic device, e.g., configured in a mobile terminal or a server device.

As shown in FIG. 1, the audio playing method provided by this embodiment includes the following steps.

At S 110, during a process of playing current audio and video data, upon obtaining an audio data switching instruction, target audio data associated with the audio data switching instruction is requested from a server.

The audio playing method in this embodiment may be applicable to a plurality of video application platforms. Video data and audio data of the current audio and video data played are two sets of data independent of each other. During the playing process, the video data and the audio data may be played synchronously according to information of timestamps when the video data and the audio data are received, or according to key frame information of the audio data and/or the video data. A key frame is the most important frame in compressed encoding of the audio and video data, e.g., I-frames in the compressed encoding of the video data.

During the process of playing the current audio and video data, upon obtaining the audio data switching instruction, the client sends a request to the server to obtain the target audio data associated with the audio data switching instruction. The target audio data is a target object of audio switching, and initial audio data in the current audio and video data is switched to the target audio data. During the process of obtaining the target audio data, a connection channel with the server is established through a data obtaining link for the target audio data provided by the server; and the target audio data is then obtained through the connection channel and cached, and will be played after the playing time is determined. The target audio data and the initial audio data are data of different audio contents associated with the video data of the current audio and video data. In some scenarios, the initial audio data and the target audio data may be dubbing audio data of different languages matching the same video data. For example, a movie video includes dubbing audio data of different languages matching with the movie video, such as Chinese, English, French, Japanese and etc. The audiences of the movie may switch the audio data of any language during the process of watching the movie. Alternatively, dubs of some animated cartoons are provided in a Mandarin version and a dialect version, and audiences may select the audio data of different versions to play, and switch the dubbing audio data of different languages during the playing process.

At S120, a playing time of the target audio data is determined based on key frame information of video data of the current audio and video data.

When an audio and a video are synchronized, the video may be usually synchronized to the audio. That is, the video is synchronized based on a playing speed of the audio. The audio may also be synchronized to the audio. That is, the audio is synchronized based on a playing speed of the video. Alternatively, the video and the audio may also be synchronized to an external clock. An external clock is selected as a reference, and the clock is used as a standard for the playing speeds of both the video and the audio. In this embodiment, in consideration of the instability that the audio will be switched, a synchronization strategy of synchronizing the audio to the video is selected.

In the video data that has been cached but not played, a video key frame that is adjacent to a video image frame corresponding to a time when the audio data switching instruction is obtained and has not been played is determined, i.e., a first video key frame after the video image frame corresponding to the time when the audio data switching instruction is obtained according to a chronological order of a plurality of video image frames. A video playing time corresponding to the video key frame is then taken as the playing time of the target audio data. Thus, a quick response may be made to perform an audio switching operation after a user gives the audio data switching instruction.

At S130, the initial audio data of the current audio and video data is switched to the target audio data and the target audio data is played at the playing time.

The target audio data is played instead of the initial audio data at the determined playing time of the target audio data. While new target audio data is consumed, the cached data of the initial audio data after the playing time in an audio data cache region also needs to be cleared, avoiding that the initial audio data is played continuously after the playing time. Thus, playing continuation of the target audio data and the initial audio data is realized. In this process, the playing of the video data is not stopped, and the problems of black screen or lag will not occur.

According to the technical solution of this embodiment of the present disclosure, during the process of playing the current audio and video data, upon obtaining the audio data switching instruction, the target audio data associated with the audio data switching instruction may be requested from the server; the playing time of the target audio data may be determined based on the key frame information of the video data of the current audio and video data; and the initial audio data of the current audio and video data is switched to the target audio data and the target audio data is played at the playing time. The audio data and the video data of the audio and video data to be played are independent of each other, and these two pieces of data independent of each other are played synchronously based on the key frame information of the video data. The technical solution of this embodiment of the present disclosure solves the problems of excessive traffic consumption and unsmooth video playing due to that a video including another different audio needs to be switched when audios are switched in the related art. It is realized that only audio data is switched in the process of playing the video, avoiding redundant video content downloading, and allowing the video to be played smoothly and avoiding black screen, lag and the like of a video playing interface.

### Embodiment II

This embodiment of the present disclosure may be combined with a plurality of solutions in the audio playing method provided in the above embodiment. The audio playing method provided in this embodiment describes a process from playing the current audio and video data to the audio data being switched.

FIG. 2 is a flowchart of an audio playing method provided by Embodiment II of the present disclosure. As shown in FIG. 2, the audio playing method provided by this embodiment includes the following steps.

At S210, according to an audio and video data obtaining instruction of a user, a data obtaining link for video data associated with the audio and video data obtaining instruction and a data obtaining link for at least one piece of audio data corresponding to the video data are requested from the server.

The audio playing method in this embodiment may be applicable to a plurality of video application platforms. Video data and audio data of the current audio and video data played are two sets of data independent of each other. That is to say, during a process of producing the audio and video data, the audio data and the video data are made separately. A plurality of audio contents are made correspondingly to one video content, and each audio content is different from each other. For example, a movie video corresponds to dubbing audio data of different languages matching with the movie video, such as Chinese, English, French, Japanese and etc.

When the user selects a video to watch on a video application platform, the user may search for a video that the user wants to watch on the platform or watch a video recommended by the video application platform. The user sends the audio and video data obtaining instruction to a video application client upon determining the video to be watched, and the video application client requests the corresponding audio data and video data resources from the server according to the audio and video data obtaining instruction. The server feeds back corresponding audio and video data resource links including one video data obtaining link and a corresponding data obtaining link for at least one piece of audio data.

In past audio and video data, the audio data and the video data are fused together. If there are multiple different dubbing versions for a film and television work, multiple video files including the same video content and different language audios are stored on the server. For the server, the video production cost and the storage cost are high. According to the technical solution of this embodiment, the video data and the audio data may be stored separately. When a video is played, the corresponding video data and audio data set may be played synchronously according to the playing requirement of the user. The video production cost and the storage cost of the server are greatly reduced. This is more friendly for the running of the server.

At S220, according to an initial audio data determination instruction of the user, the initial audio data is determined from the at least one piece of audio data, and the video data and the initial audio data are obtained as the current audio and video data through data obtaining links respectively corresponding to the video data and the initial audio data, and the current audio and video data is played.

The user needs to select one from one or more audio resources provided by the server as the initial audio data. After the user determines the initial audio data, the initial audio data determination instruction is sent to the client. The client determines the initial audio data from the at least one piece of audio data according to the obtained initial audio data determination instruction, and establishes audio and video data transmission links with the server according to the corresponding data obtaining links to obtain and play the video data and the initial audio data as the current audio and video data.

At S230, during the process of playing the current audio and video data, upon obtaining an audio data switching instruction, target audio data associated with the audio data switching instruction is requested from the server.

In the audio and video data played currently, if the video data corresponds to more than one piece of audio data, the user may send the audio data switching instruction during the process of playing the current audio and video data to switch different audio data. For example, the initial audio data is English dubbing audio of the video data, and if the user wants to switch to a Chinese dubbing audio, the Chinese dubbing audio data is the target audio data.

At S240, a playing time of the target audio data is determined based on key frame information of video data of the current audio and video data.

In this embodiment, a synchronization strategy of synchronizing the audio to the video is selected. In the video data that has been cached but not played, a video key frame that is adjacent to a video image frame corresponding to a time when the audio data switching instruction is obtained and has not been played is determined. A video playing time corresponding to the video key frame is then taken as the playing time of the target audio data. Thus, a quick response may be made to perform an audio switching operation after a user gives the audio data switching instruction.

At S250, the initial audio data of the current audio and video data is switched to the target audio data and the target audio data is played at the playing time.

In the technical solution of this embodiment of the present disclosure, the audio and video resources are provided for the user in such a manner that the video data and the audio data are independent of each other, and the corresponding audio data and the video data are played synchronously according to the selection of the user. Moreover, during the playing process of the current audio and video data, upon obtaining the audio data switching instruction, the target audio data associated with the audio data switching instruction is requested from the server; the playing time of the target audio data is determined based on the key frame information of the video data of the current audio and video data; and the initial audio data of the current audio and video data is switched to the target audio data and the target audio data is played at the playing time. The user may be allowed to switch different audio data without pausing a video during the process of watching the video. The technical solution of this embodiment of the present disclosure solves the problems of excessive traffic consumption and unsmooth video playing due to that a video including another different audio needs to be switched when audios are switched in the related art. It is realized that only audio data is switched in the process of playing the video, avoiding redundant video content downloading, and allowing the video to be played smoothly and avoiding black screen, lag and the like of a video playing interface. The user is allowed to have better video consumption experience.

### Embodiment III

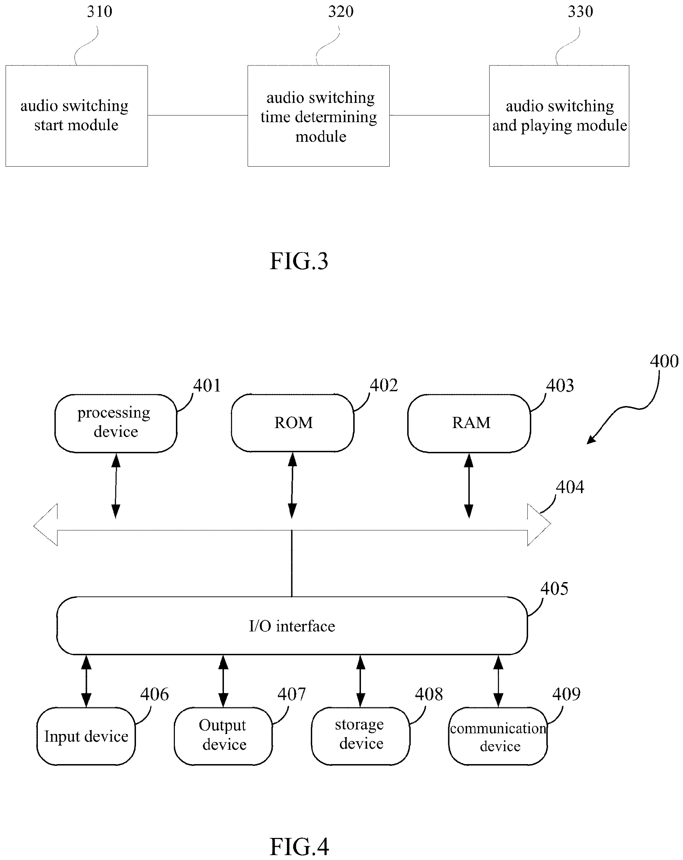

FIG. 3 is a structural schematic diagram of an audio playing apparatus provided by Embodiment III of the present disclosure. The audio playing method provided by this embodiment is applicable to a scenario of audio playing, e.g., a case in which audio data is switched during a process of playing a video.

As shown in FIG. 3, the audio playing apparatus includes an audio switching start module 310, an audio switching time determining module 320, and an audio switching and playing module 330.

The audio switching start module 310 is configured to, during a process of playing current audio and video data, upon obtaining an audio data switching instruction, request target audio data associated with the audio data switching instruction from a server; the audio switching time determining module 320 is configured to determine a playing time of the target audio data based on key frame information of video data of the current audio and video data; and the audio switching and playing module 330 is configured to switch initial audio data of the current audio and video data to the target audio data and play the target audio data at the playing time.

According to the technical solution of this embodiment of the present disclosure, during the process of playing the current audio and video data, upon obtaining the audio data switching instruction, the target audio data associated with the audio data switching instruction is requested from the server; the playing time of the target audio data is determined based on the key frame information of the video data of the current audio and video data; and the initial audio data of the current audio and video data is switched to the target audio data and the target audio data is played at the playing time. The audio data and the video data of the audio and video data to be played are independent of each other, and two pieces of data independent of each other are played synchronously based on the key frame information of the video data. The technical solution of this embodiment of the present disclosure solves the problems of excessive traffic consumption and unsmooth video playing due to that a video including another different audio needs to be switched when audios are switched in the related art. It is realized that only audio data is switched in the process of playing the video, avoiding redundant video content downloading, and allowing the video to be played smoothly and avoiding black screen, lag and the like of a video playing interface.

In some implementations, the audio switching time determining module is configured 320 to:
determine a video key frame of the video data that is adjacent to a video image frame corresponding to a time when the audio data switching instruction is obtained and has not been played; and take a video playing time corresponding to the video key frame as the playing time of the target audio data.

In some implementations, the audio switching and playing module is configured 330 to:
clear cached data of the initial audio data after the playing time, and read and play cached data of the target audio data from the playing time.

In some implementations, the audio switching start module 310 is configured to:
establish a data obtaining link for the target audio data with the server, and obtain and cache the target audio data based on the data obtaining link.

In some implementations, the audio switching start module 310 is further configured to:
disconnect a data obtaining link for obtaining the initial audio data from the server.

In some implementations, the audio playing apparatus further includes an audio and video playing module configured to:
before playing the current audio and video data, according to an audio and video data obtaining instruction of a user, request a data obtaining link for video data associated with the audio and video data obtaining instruction and a data obtaining link for at least one piece of audio data corresponding to the video data from the server; and according to an initial audio data determination instruction of the user, determine the initial audio data from the at least one piece of audio data, and obtain the video data and the initial audio data as the current audio and video data through data obtaining links respectively corresponding to the video data and the initial audio data.

In some implementations, the initial audio data and the target audio data are dubbing audio data of different languages matching the same video data.

The audio playing apparatus provided in the embodiment of the present disclosure may perform the audio playing method provided in any embodiment of the present disclosure and has corresponding functional modules for performing the method and corresponding effects.

The plurality of units and modules included in the data processing apparatus are only divided according to functional logics, but are not limited to the above division, as long as corresponding functions can be implemented. In addition, specific names of the plurality of functional units are merely for the purpose of distinguishing from each other, but are not intended to limit the protection scope of the present disclosure.

### Embodiment IV

With reference to FIG. 4, there is shown a structural schematic diagram of an electronic device (e.g., a terminal device or a server in FIG. 4) 400 adapted to implement the embodiments of the present disclosure. The terminal device in this embodiment of the present application may include, but is not be limited to, mobile terminals such as a mobile phone, a notebook computer, a digital broadcasting receiver, a personal digital assistant (PDA), a portable Android device (PAD), a portable media player (PMP), and a vehicle-mounted terminal (e.g., a vehicle-mounted navigation terminal), and fixed terminals such as a digital TV and a desktop computer. The electronic device 400 shown in FIG. 4 is merely an example, and should not impose any limitation to the functions and the range of use of the embodiments of the present disclosure.

As shown in FIG. 4, the electronic device 400 may include a processing apparatus (e.g., a central processing unit, or a graphics processing unit) 401, which can perform a plurality of suitable actions and processing according to a program stored on a read-only memory (ROM) 402 or a program loaded from a storage device 408 into a random-access memory (RAM) 403. The RAM 403 further stores various programs and data required for operations of the electronic device 400. The processing apparatus 401, the ROM 402, and the RAM 403 are interconnected by means of a bus 404. An input/output (I/O) interface 405 also connected to the bus 404.

Usually, the following apparatuses may be connected to the I/O interface 405: an input apparatus 406 including, for example, a touch screen, a touch pad, a keyboard, a mouse, a camera, a microphone, an accelerometer, and a gyroscope; an output apparatus 407 including, for example, a liquid crystal display (LCD), a loudspeaker, and a vibrator; a storage device 408 including, for example, a magnetic tape and a hard disk; and a communication device 409. The communication device 409 may allow the electronic device 400 to be in wireless or wired communication with other devices to exchange data. Although FIG. 4 illustrates the electronic device 400 having a plurality of apparatuses, it is to be understood that all the illustrated apparatuses are not necessarily implemented or included. More or less apparatuses may be implemented or included alternatively.

According to the embodiments of the present disclosure, the process described above with reference to the flowchart may be implemented as a computer software program. For example, an embodiment of the present disclosure includes a computer program product including a computer program carried by a non-transitory computer-readable medium. The computer program includes a program code for executing the method shown in the flowchart. In such an embodiment, the computer program may be downloaded online through the communication device 409 and installed, or installed from the storage device 408, or installed from the ROM 402. When the computer program is executed by the processing apparatus 401, the functions defined in the audio playing method of the embodiments of the present disclosure are executed.

The electronic device provided in the present embodiment of the present disclosure and the audio playing method provided in the foregoing embodiments belong to the same concept. For technical details not described in detail in the present embodiment, a reference may be made to the foregoing embodiments, and the present embodiment and the foregoing embodiments have the same effects.

### Embodiment V

An embodiment of the present disclosure provides a computer storage medium on which a computer program is stored. The program, when executed by a processor, causes implementing the audio playing method provided in the foregoing embodiments.

The computer-readable medium described above in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination of them. Examples of the computer-readable storage medium may include, but are not limited to, an electrical connection with one or more wires, a portable computer disk, a hard disk, a random-access memory (RAM), a read-only memory (ROM), an erasable programmable read-only memory (EPROM) or a flash memory (FLASH), an optical fiber, a compact disk read-only memory (CD-ROM), an optical storage device, a magnetic storage device, or any appropriate combination thereof. In the present disclosure, the computer-readable storage medium may be any tangible medium that contains or stores a program, and the program may be used by or in combination with an instruction execution system, apparatus, or device. In the present disclosure, the computer-readable signal medium may include a data signal that propagates in a baseband or as a part of a carrier and carries thereon a computer-readable program code. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable storage medium may send, propagate or transmit a program used by or in combination with an instruction execution system, apparatus or device. The program code included on the computer-readable medium may be transmitted by using any suitable medium, including but not limited to an electric wire, a fiber-optic cable, radio frequency (RF) and the like, or any appropriate combination thereof.

In some implementations, a client and a server may communicate by means of any network protocol currently known or to be developed in future such as HyperText Transfer Protocol (HTTP), and may achieve communication and interconnection with digital data (e.g., a communication network) in any form or of any medium. Examples of the communication network include a local area network (LAN), a wide area network (WAN), an internet work (e.g., the Internet), a peer-to-peer network (e.g., ad hoc peer-to-peer network), and any network currently known or to be developed in future.

The above-mentioned computer-readable medium may be included in the electronic device described above, or may exist alone without being assembled with the electronic device.

The above-mentioned computer-readable medium may carry one or more programs which, when executed by the electronic device, cause the electronic device to:
during a process of playing current audio and video data, upon obtaining an audio data switching instruction, request target audio data associated with the audio data switching instruction from a server; determine a playing time of the target audio data based on key frame information of video data of the current audio and video data; and switch initial audio data of the current audio and video data to the target audio data and play the target audio data at the playing time.

A computer program code for performing the operations in the present disclosure may be written in one or more programming languages or a combination thereof. The programming languages include but are not limited to object-oriented programming languages, such as Java, Smalltalk, and C++, and conventional procedural programming languages, such as C or similar programming languages. The program codes may be executed fully on a user's computer, executed partially on a user's computer, executed as an independent software package, executed partially on a user's computer and partially on a remote computer, or executed fully on a remote computer or a server. In a circumstance in which a remote computer is involved, the remote computer may connect to a user computer over any type of network, including a local area network (LAN) or a wide area network (WAN), or may connect to an external computer (e.g., over the Internet by using an Internet service provider).

The flowcharts and block diagrams in the accompanying drawings illustrate system architectures, functions and operations that may be implemented by the system, method and computer program product according to a plurality of embodiments of the present disclosure. In this regard, each block in the flowcharts or block diagrams may represent a module, a program segment or a part of codes, and the module, the program segment or the part of codes may include one or more executable instructions for implementing specified logic functions. It should also be noted that in some alternative implementations, the functions marked in the blocks may alternatively occur in a different order from that marked in the drawings. For example, two successively shown blocks actually may be executed in parallel substantially, or may be executed in reverse order sometimes, depending on the functions involved. It should also be noted that each block in the flowcharts and/or block diagrams and combinations of the blocks in the flowcharts and/or block diagrams may be implemented by a dedicated hardware-based system for executing specified functions or operations, or may be implemented by a combination of dedicated hardware and computer instructions.

Related units described in the embodiments of the present disclosure may be implemented by software, or may be implemented by hardware. The name of a unit or a module does not constitute a limitation on the unit or the module itself. For example, a data generation module may also be described as "a video data generation module".

The functions described above in this specification may be at least partially performed by one or more hardware logic components. For example, exemplary types of hardware logic components that can be used without limitations include a field programmable gate array (FPGA), an application specific integrated circuit (ASIC), an application specific standard product (ASSP), a system on chip (SOC), a complex programmable logic device (CPLD), and the like.

In the context of the present disclosure, a machine-readable medium may be a tangible medium that may include or store a program for use by or in combination with an instruction execution system, apparatus or device. The machine-readable medium may be a machine-readable signal medium or a machine-readable storage medium. The machine-readable medium may include but be not limited to an electronic, magnetic, optical, electromagnetic, infrared, or semiconductor system, apparatus or device, or any appropriate combination thereof. Examples of the machine-readable storage medium may include an electrical connection based on one or more wires, a portable computer disk, a hard disk, a random-access memory (RAM), a read-only memory (ROM), an erasable programmable ROM (an EPROM or a flash memory), an optical fiber, a portable compact disc read-only memory (CD-ROM) an optical storage device, a magnetic storage device, or any suitable combination thereof.

According to one or more embodiments of the present disclosure, [Example 1] provides an audio playing method, including:
during a process of playing current audio and video data, upon obtaining an audio data switching instruction, requesting target audio data associated with the audio data switching instruction from a server;
determining a playing time of the target audio data based on key frame information of video data of the current audio and video data; and
switching initial audio data of the current audio and video data to the target audio data and playing the target audio data at the playing time.

According to one or more embodiments of the present disclosure, [Example 2] provides an audio playing method, further including:
in some implementations, the determining a playing time of the target audio data based on key frame information of video data of the current audio and video data including:
determining a video key frame of the video data that is adjacent to a video image frame corresponding to a time when the audio data switching instruction is obtained and has not been played; and
taking a video playing time corresponding to the video key frame as the playing time of the target audio data.

According to one or more embodiments of the present disclosure, [Example 3] provides an audio playing method, further including:
in some implementations, the switching initial audio data of the current audio and video data to the target audio data and playing the target audio data at the playing time including:
clearing cached data of the initial audio data after the playing time, and reading and playing cached data of the target audio data from the playing time.

According to one or more embodiments of the present disclosure, [Example 4] provides an audio playing method, further including:
in some implementations, upon obtaining an audio data switching instruction, requesting target audio data associated with the audio data switching instruction from a server including:
establishing a data obtaining link for the target audio data with the server, and obtaining and caching the target audio data based on the data obtaining link.

According to one or more embodiments of the present disclosure, [Example 5] provides an audio playing method, further including:
in some implementations, upon obtaining the audio data switching instruction,
disconnecting a data obtaining link for obtaining the initial audio data from the server.

According to one or more embodiments of the present disclosure, [Example 6] provides an audio playing method, further including:
in some implementations, before the playing current audio and video data, the method further including:
according to an audio and video data obtaining instruction of a user, requesting a data obtaining link for video data associated with the audio and video data obtaining instruction and a data obtaining link for at least one piece of audio data corresponding to the video data from the server; and
according to an initial audio data determination instruction of the user, determining the initial audio data from the at least one piece of audio data, and obtaining the video data and the initial audio data as the current audio and video data through data obtaining links respectively corresponding to the video data and the initial audio data.

According to one or more embodiments of the present disclosure, [Example 7] provides an audio playing method, further including:
in some implementations, the initial audio data and the target audio data being dubbing audio data of different languages matching the same video data.

According to one or more embodiments of the present disclosure, [Example 8] provides an audio playing apparatus, including:
an audio switching start module configured to, during a process of playing current audio and video data, upon obtaining an audio data switching instruction, request target audio data associated with the audio data switching instruction from a server;
an audio switching time determining module configured to determine a playing time of the target audio data based on key frame information of video data of the current audio and video data; and
an audio switching and playing module configured to switch initial audio data of the current audio and video data to the target audio data and play the target audio data at the playing time.

According to one or more embodiments of the present disclosure, [Example 9] provides an audio playing apparatus, further including:
in some implementations, the audio switching time determining module being configured to:
determine a video key frame of the video data that is adjacent to a video image frame corresponding to a time when the audio data switching instruction is obtained and has not been played; and
take a video playing time corresponding to the video key frame as the playing time of the target audio data.

According to one or more embodiments of the present disclosure, [Example 10] provides an audio playing apparatus, further including:
in some implementations, the audio switching and playing module being configured to:
clear cached data of the initial audio data after the playing time, and read and play cached data of the target audio data from the playing time.

According to one or more embodiments of the present disclosure, [Example 11] provides an audio playing apparatus, further including:
in some implementations, the audio switching start module being configured to:
establish a data obtaining link for the target audio data with the server, and obtain and cache the target audio data based on the data obtaining link.

According to one or more embodiments of the present disclosure, [Example 12] provides an audio playing apparatus, further including:
in some implementations, the audio switching start module being further configured to:
disconnect a data obtaining link for obtaining the initial audio data from the server.

According to one or more embodiments of the present disclosure, [Example 13] provides an audio playing apparatus, further including:
in some implementations, an audio and video playing module configured to:
before playing the current audio and video data, according to an audio and video data obtaining instruction of a user, request a data obtaining link for video data associated with the audio and video data obtaining instruction and a data obtaining link for at least one piece of audio data corresponding to the video data from the server; and
according to an initial audio data determination instruction of the user, determine the initial audio data from the at least one piece of audio data, and obtain the video data and the initial audio data as the current audio and video data through data obtaining links respectively corresponding to the video data and the initial audio data.

According to one or more embodiments of the present disclosure, [Example 14] provides an audio playing apparatus, further including:
in some implementations, the initial audio data and the target audio data being dubbing audio data of different languages matching the same video data.

Further, while operations are depicted in a particular order, this should not be understood as requiring that these operations be performed in the particular order shown or in sequential order. In certain circumstances, multitasking and parallel processing may be advantageous. Likewise, while several specific implementation details are contained in the above discussion, these should not be construed as limitations on the scope of the present disclosure. Certain features that are described in the context of separate embodiments can also be implemented in combination in a single embodiment. Conversely, various features that are described in the context of a single embodiment can also be implemented in multiple embodiments separately or in any suitable subcombination.

## Claims

1. An audio playing method, comprising:
requesting, upon obtaining an audio data switching instruction, target audio data associated with the audio data switching instruction from a server during a process of playing current audio and video data;
determining a playing time of the target audio data based on key frame information of video data of the current audio and video data; and
switching initial audio data of the current audio and video data to the target audio data and playing the target audio data at the playing time.

2. The audio playing method according to claim 1, wherein the determining a playing time of the target audio data based on key frame information of video data of the current audio and video data comprises:
determining a video key frame of the video data that is adjacent to a video image frame corresponding to a time when the audio data switching instruction is obtained and has not been played; and
taking a video playing time corresponding to the video key frame as the playing time of the target audio data.

3. The audio playing method according to claim 1, wherein the switching initial audio data of the current audio and video data to the target audio data and playing the target audio data at the playing time comprises:
clearing cached data of the initial audio data after the playing time, and reading and playing cached data of the target audio data from the playing time.

4. The audio playing method according to claim 1, wherein the requesting, upon obtaining an audio data switching instruction, target audio data associated with the audio data switching instruction from a server comprises:
establishing a data obtaining link for the target audio data with the server, and obtaining and caching the target audio data based on the data obtaining link.

5. The audio playing method according to claim 4, upon obtaining the audio data switching instruction, further comprising:
disconnecting a data obtaining link for obtaining the initial audio data from the server.

6. The audio playing method according to claim 1, before the playing current audio and video data, further comprising:
requesting, according to an audio and video data obtaining instruction of a user, a data obtaining link for video data associated with the audio and video data obtaining instruction and a data obtaining link for at least one piece of audio data corresponding to the video data from the server; and
determining, according to an initial audio data determination instruction of the user, the initial audio data from the at least one piece of audio data, and obtaining the video data and the initial audio data as the current audio and video data through data obtaining links respectively corresponding to the video data and the initial audio data.

7. The audio playing method according to any one of claims 1 to 6, wherein the initial audio data and the target audio data are dubbing audio data of different languages matching a same video data.

8. An audio playing apparatus, comprising:
an audio switching start module configured to request, upon obtaining an audio data switching instruction, target audio data associated with the audio data switching instruction from a server during a process of playing current audio and video data;
an audio switching time determining module configured to determine a playing time of the target audio data based on key frame information of video data of the current audio and video data; and
an audio switching and playing module configured to switch initial audio data of the current audio and video data to the target audio data and play the target audio data at the playing time.

9. An electronic device, comprising:
at least one processor; and
a storage device with at least one program stored thereon,
the at least one program, when executed by the at least one processor, causes the at least one processor to implement the audio playing method according to any one of claims 1 to 7.

10. A storage medium comprising computer-executable instructions, wherein the computer-executable instructions, when executed by a computer processor, cause the computer processor to implement the audio playing method according to any one of claims 1 to 7.

11. A computer program product, comprising a computer program carried on a non-transitory computer-readable storage medium, wherein the computer program comprises program codes for performing the audio playing method according to any one of claims 1 to 7.
